# FASCICULE DE BREVET EUROPEEN

(11) **EP 4 040 052 B1**
(45) Date de publication et mention de la délivrance du brevet: **07.05.2025**
(21) Numéro de dépôt: 22154921.5
(22) Date de dépôt: 03.02.2022
(51) Int. Cl.: F24D 13/02, F24H 3/04, F24H 9/00, F24H 9/02

(54) **SYSTÈME À ENSEMBLE DE MODULES CHAUFFANTS**
SYSTEM MIT HEIZMODULSATZ
SYSTEM WITH ASSEMBLY OF HEATING MODULES

(30) Priorité: 03.02.2021 FR 2101029
(43) Date de publication de la demande: 10.08.2022
(73) Titulaire: Atlantic Industrie, 85000 La Roche sur Yon (FR)
(72) Inventeur: HUMBERT, Virgile, 85150 ST FOY (FR); VAUGELADE, Arnaud, 85170 les Lucs-sur-boulogne (FR)
(74) Mandataire: Ipsilon

(56) Documents cités:
- EP-A1- 3 578 091
- EP-A1- 3 714 212
- WO-A1-2017/158580
- FR-A1- 2 847 662
- FR-A1- 2 868 518

## Description

La présente invention concerne un système comprenant un ensemble de modules chauffants destinés à être fixés à un support sensiblement vertical, notamment pour le chauffage d'un local. Les documents FR 2 868 518 A1, FR 2 847 662 A1 et EP 3 578 091 A1 divulguent un tel système.

On connaît du document EP 3 147 576 un ensemble chauffant dans lequel des carreaux chauffant renfermant une résistance électrique sont disposés les uns à côté des autres de manière à recouvrir un sol ou un mur.

Cette conception d'ensemble chauffant est confrontée à la problématique de la dissipation thermique due à la chauffe des résistances électriques mais ceci n'est toutefois pas abordé dans ce document.

Cette problématique se pose notamment dans la mesure où chaque carreau chauffant influence thermiquement le carreau chauffant voisin dans l'ensemble. De ce fait, chaque carreau doit non seulement dissiper les calories qu'il génère mais également une partie des calories générées par les carreaux voisins. Lorsque les carreaux chauffant sont disposés verticalement contre un mur et donc les uns au-dessus des autres, ce problème est d'ailleurs accentué puisque la chaleur dissipée par un carreau disposé en partie basse de l'ensemble chauffant se propage verticalement aux carreaux disposés au-dessus de lui.

L'invention propose notamment une solution au problème d'influence thermique entre des carreaux chauffants disposés verticalement.

À cet effet, l'invention a pour objet un système selon la revendication 1. Le système comprend un ensemble chauffant et un support sensiblement vertical auquel est fixé ledit ensemble chauffant, l'ensemble chauffant comprenant au moins deux modules électriques chauffants disposés contre le support vertical, l'un des modules, dit module supérieur, étant disposé à une cote supérieure à celle de l'autre module, dit module inférieur, chaque module électrique chauffant comprenant un corps qui renferme au moins un élément électrique chauffant et qui est délimité extérieurement par une paroi, la paroi étant pourvue, d'une part, d'une ou de plusieurs ouvertures d'entrée d'air aménagées dans sa partie basse et, d'autre part, d'une ou de plusieurs ouvertures de sortie d'air disposées dans sa partie haute pour la circulation d'un flux d'air ascendant à l'intérieur dudit corps, notamment sur ledit au moins un élément électrique chauffant à refroidir, au moins une partie de la ou des ouvertures de sortie d'air de chaque module étant orientée de manière à dévier au moins une partie du flux d'air sortant dudit module de telle manière que, pour les modules inférieur et supérieur, ladite au moins une partie du flux d'air chauffée par ledit au moins un élément électrique chauffant et sortant du module inférieur est déviée en éloignement du module supérieur, le système étant caractérisé en ce que chaque module comporte une paroi supplémentaire disposée devant la paroi frontale du corps du module et à distance de ladite paroi de manière à former une façade avant pour le corps.

En orientant ainsi au moins une partie de la ou des ouvertures de sortie d'air de chaque module (appelée partie d'ouverture de sortie d'air orientée), la partie du flux d'air qui est chauffée lors du passage le long dudit au moins un élément électrique chauffant et qui sort du module par cette partie d'ouverture de sortie d'air orientée est déviée de sa trajectoire ascendante verticale qui, normalement, conduirait le flux directement sur le module supérieur. Le flux d'air chaud est dévié en s'éloignant du module supérieur, c'est-à-dire qu'il est dirigé vers l'avant du module, par opposition à l'arrière du module qui fait face au support de fixation de l'ensemble. Plus particulièrement, le flux d'air est dirigé soit sensiblement horizontalement soit avec une inclinaison en biais vers le haut. De cette manière, le flux d'air chaud ne vient pas chauffer le module supérieur. Cette configuration permet ainsi de limiter l'influence thermique entre les modules.

On notera que la disposition des modules dans l'agencement de l'ensemble peut prendre différentes formes : par exemple, dans l'agencement le module inférieur peut être disposé directement en dessous d'un autre module (à l'aplomb du module du dessus), à savoir le module supérieur, et il peut éventuellement être disposé de manière adjacente à un autre module situé à la même cote ou dont la cote est supérieure à la sienne (suivant une vue de face de l'agencement contre le support sensiblement vertical). Le module inférieur peut être disposé dans l'agencement de manière à ce que le module supérieur soit décalé horizontalement par rapport au module inférieur et ne soit ainsi qu'en partie sous le module supérieur (suivant une vue de face de l'agencement contre le support sensiblement vertical). Le module inférieur peut d'ailleurs être également en partie sous au moins un autre module supérieur. La forme externe des corps des modules influence la manière dont les modules peuvent être disposés de manière adjacente les uns par rapport aux autres en couvrant tout ou partie du support sensiblement vertical (au-dessus, en dessous et sur les côtés).

Selon d'autres caractéristiques possibles :
- la paroi délimitant le corps de chaque module comporte une paroi arrière et ladite paroi frontale opposée à ladite paroi arrière, ladite paroi arrière faisant face au support sensiblement vertical, ladite au moins une partie de la ou des ouvertures de sortie d'air qui est orientée de manière à dévier au moins une partie du flux d'air sortant du module étant aménagée dans la partie supérieure de la paroi frontale;
- la paroi supplémentaire formant façade avant est inclinée par rapport à la paroi frontale de telle manière que l'écartement entre ladite paroi supplémentaire et la paroi frontale est plus grand en partie haute du corps qu'en partie basse ;
- la paroi supplémentaire formant façade avant est inclinée par rapport à la paroi frontale d'un angle d'une valeur située entre 1 et 45°, de préférence entre 5 et 35°, de manière encore préférée entre 10 et 30° ; - la paroi supplémentaire formant façade avant est perforée dans son épaisseur sur au moins une partie de sa surface;
- la paroi supplémentaire formant façade avant possède des dimensions qui sont égales ou supérieures à celles de la paroi frontale;
- la paroi frontale présente une forme générale concave orientée vers l'extérieur du corps de manière à guider vers l'extérieur ladite au moins une partie du flux d'air sortant du module et qui est déviée;
- que le corps de chaque module renferme un déflecteur interne qui est disposé de manière à dévier le flux d'air ascendant qui traverse la zone du corps où est logé ledit au moins un élément électrique chauffant en direction de ladite au moins une partie de la ou des ouvertures de sortie d'air qui est orientée de manière à dévier au moins une partie du flux d'air sortant du module et qui est appelée partie d'ouverture de sortie d'air orientée ;
- le déflecteur interne sépare le flux d'air ascendant entrant dans le corps par la ou les ouvertures d'entrée d'air, d'une part, en un premier flux d'air ascendant qui traverse une première zone où est logé ledit au moins un élément électrique chauffant et, d'autre part, en un second flux d'air ascendant qui traverse une deuxième zone du corps, ledit déflecteur interne guidant ce second flux d'air ascendant en direction d'une ou de plusieurs autres ouvertures de sortie d'air qui sont disposées dans une partie haute de la paroi du corps sensiblement horizontale et qui sont séparées de la partie d'ouverture de sortie d'air orientée par le déflecteur interne ;
- le déflecteur interne a une fonction d'écran thermique entre la première zone où est logé ledit au moins un élément électrique chauffant et la deuxième zone du corps traversée par le second flux d'air.

### Brève description des dessins

D'autres caractéristiques et avantages apparaîtront au cours de la description qui va suivre, donnée uniquement à titre d'exemple non limitatif et faite en référence aux dessins annexés, sur lesquels :
[Fig. 1] La Figure 1 est une vue schématique en coupe de côté d'un système ne faisant pas partie de l'invention ;
[Fig. 2] La Figure 2 est une vue schématique en coupe de côté d'un système selon un premier mode de réalisation de l'invention ;
[Fig. 3] La Figure 3 est une vue schématique en coupe de côté d'un système ne faisant pas partie de l'invention ;
[Fig. 4] La Figure 4 est une vue schématique en coupe de côté d'un système selon un deuxième mode de réalisation de l'invention ;
[Fig. 5] La Figure 5 est une vue schématique en coupe de côté d'un système selon un troisième mode de réalisation de l'invention ;
[Fig. 6] La Figure 6 est une vue schématique en coupe de côté d'un système selon un quatrième mode de réalisation de l'invention ;
[Fig. 7] La Figure 7 est une vue schématique en coupe de côté d'un système selon un cinquième mode de réalisation de l'invention ;
[Fig. 8] La Figure 8 est une vue schématique en coupe de côté d'un système selon un sixième mode de réalisation de l'invention.

### Description de mode(s) de réalisation

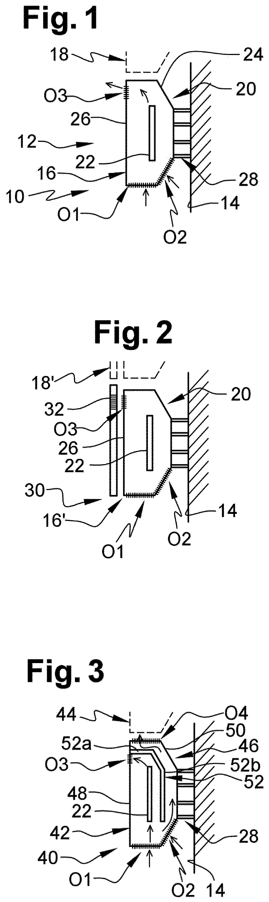

Comme représenté à la Figure 1 et désigné par la référence générale notée 10, un système comprend un ensemble chauffant 12 et un support sensiblement vertical 14, ici une paroi d'un local, auquel l'ensemble est fixé.

L'ensemble chauffant 12 comprend généralement plusieurs modules électriques chauffants dont l'un est disposé à une cote supérieure à la cote de l'autre module. Le module du dessous 16, appelé module inférieur, est représenté en entier sur la figure 1 et le module du dessus 18, appelé module supérieur, est représenté partiellement en pointillés. On notera que le module supérieur 18 peut être disposé directement au-dessus du module inférieur 16 suivant un agencement vertical. Alternativement, suivant une vue de face prise dans un plan parallèle à celui du support 14 (plan perpendiculaire à la figure 1), le module supérieur 18 peut être décalé horizontalement par rapport à la position du module inférieur 16 de manière à être seulement en partie au-dessus du module inférieur, au moins un autre module supérieur pouvant également être en partie au-dessus du même module inférieur 16.

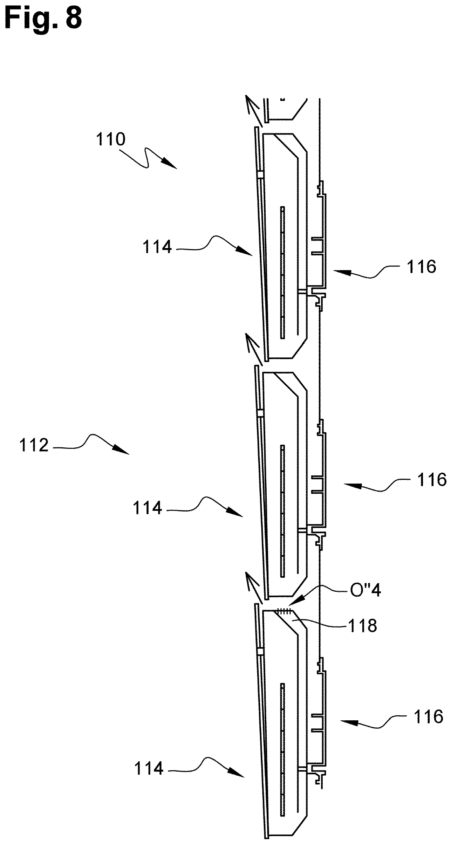

La figure 8 représente, dans un mode de réalisation, un ensemble chauffant qui comprend plusieurs modules électriques chauffants disposés à des cotes différentes les uns des autres et, par exemple, disposés à l'aplomb les uns des autres.

Dans la figure 1, ainsi que dans les modes de réalisation illustrés sur les figures, les modules électriques chauffants d'un ensemble chauffant sont généralement tous identiques. Toutefois, alternativement, les modules électriques chauffants d'un même ensemble chauffant peuvent, au moins pour certains d'entre eux, différer d'un module à l'autre, dans la mesure où les modules inférieurs de l'ensemble permettent tous de diminuer l'influence thermique qu'ils ont sur les modules supérieurs de l'ensemble.

On notera que les formes externes des modules en vue de face (suivant une vue dans un plan parallèle au plan du support 14) peuvent adopter n'importe quelle géométrie : carrée, rectangulaire, triangulaire, en forme de losange, de cercle, d'ellipse ou une forme géométrique non régulière.

Comme représenté sur la figure 1, le module 16 (la configuration du module 18 est identique à celle du module 16) comprend un corps fermé 20 qui renferme au moins un élément électrique chauffant ou corps de chauffe 22 (ici un seul élément chauffant est représenté). Il peut par exemple s'agir d'une ou de plusieurs résistances électriques chauffantes. La fixation de l'élément électrique chauffant à l'intérieur du corps n'est pas représentée sur la figure par souci de simplicité. Il peut par exemple s'agir de bras reliés à la face interne du corps.

Le corps 20 du module comprend généralement un capot arrière 24 qui est conformé de manière à former un boîtier ouvert sur l'avant du module (opposé au support 14) pour loger l'élément chauffant 22 et une paroi frontale 26 qui vient fermer, à la manière d'une façade technique avant, l'ouverture avant du boîtier. La forme externe convexe du capot arrière 24 est disposée en regard du support mural 14 et le capot est fixé au support par l'intermédiaire d'un dispositif d'accrochage conventionnel 28 (ex: pattes de fixation et vis ou organes de fixation analogues).

Le corps fermé 20 est ainsi délimité par une paroi externe dont une partie est formée par la paroi frontale 26 et la partie restante de paroi est formée par la paroi du capot arrière 24, dite paroi arrière.

La paroi externe délimitant le corps du module 16 est pourvue de deux types d'ouvertures : une ou plusieurs ouvertures d'entrée d'air (O1, O2), généralement aménagées en partie basse du corps et une ou plusieurs ouvertures de sortie d'air (O3), généralement aménagées en partie haute du corps.

Dans la configuration illustrée sur la figure 1, plusieurs ouvertures d'entrée d'air sont disposées dans la partie basse de la paroi arrière du capot 24, notamment dans des portions adjacentes de cette paroi. Par exemple, les ouvertures d'entrée d'air sont pratiquées dans une portion horizontale (ouvertures O1) et dans une portion inclinée adjacente (ouvertures O2) de la paroi arrière, permettant ainsi à l'air d'entrer comme illustré par les flèches. La localisation, le nombre et la configuration de la ou des ouvertures d'entrée d'air peuvent varier selon la configuration du module. La ou les ouvertures O1 peuvent être tandis que la ou les ouvertures O2 sont conservées ou inversement.

La ou les ouvertures de sortie d'air O3 sont ici aménagées en partie haute de la paroi frontale 26, à proximité de la portion horizontale supérieure du capot arrière 24. En agençant la ou les ouvertures de sortie d'air en partie haute de la paroi frontale 26 qui est ici sensiblement verticale, le flux d'air ascendant qui circule à l'intérieur du corps du module, après être entré par les ouvertures d'entrée d'air O1, O2 et avoir léché l'élément chauffant 22, sort du corps par la ou les ouvertures de sortie d'air O3 qui ont une orientation sensiblement horizontale. Le flux d'air chaud sortant par ces ouvertures et qui évacue ainsi une partie de la chaleur dissipée par le corps de chauffe est ainsi dirigé vers l'avant du module 16, en éloignement de ce module et du module supérieur 18 comme représenté par la flèche sur la figure 1. Le flux d'air chaud sortant est ainsi dévié d'une trajectoire ascendante verticale qui, normalement, le conduirait directement vers le module supérieur 18 et échaufferait ainsi ce dernier. En l'absence de cette configuration d'ouverture(s) de sortie d'air déviant le flux d'air sortant, le module supérieur 18 serait ainsi soumis, d'une part, à un échauffement dû à son propre corps de chauffe et, d'autre part, à un échauffement supplémentaire dû au flux ascendant chaud provenant du module inférieur 16. Ce phénomène peut également se reproduire en cascade avec le ou les modules situés au-dessus du module 18. Le flux d'air ainsi dévié peut remonter verticalement. Cette remontée se produit toutefois à distance de l'ensemble chauffant et donc à distance du ou des modules supérieurs.

On notera que la ou les ouvertures de sortie d'air O3 peuvent alternativement être orientées de manière inclinée vers le haut tant que l'angle d'inclinaison reste inférieur à 90° afin que le flux d'air chaud sortant ne vienne pas au contact du module supérieur 18.

Selon un premier mode de réalisation, le système 30 de la figure 2 reprend le système 10 de la figure 1 (celui-ci ne sera donc pas décrit à nouveau) et y adjoint une paroi supplémentaire 32 disposée devant la paroi frontale 26 et à distance de celle-ci, formant ainsi une façade avant pour le corps du module 16'. Généralement une telle façade est de nature esthétique et peut comporter un aspect visuel (couleur, forme, motif, texture...) décoratif. Alternativement, cette façade peut remplir une fonction technique. Alternativement, cette façade peut remplir une fonction esthétique et une fonction technique.

La paroi supplémentaire 32 est par exemple fixée au corps 20 du module 16', par exemple à la paroi frontale 26, par l'intermédiaire d'un ou de plusieurs éléments de fixation non représentés ici par souci de simplicité. Le module supérieur 18' est également doté d'une paroi supplémentaire formant façade avant.

La paroi supplémentaire 32 possède ici des dimensions qui sont légèrement supérieures à celles du corps (au moins dans le sens vertical) afin de masquer ce dernier. Les dimensions de cette paroi dans le sens horizontal peuvent être égales ou être également légèrement supérieures à celles du corps. Lorsque les différents modules électriques chauffants de l'ensemble chauffant sont positionnés et fixés contre le support 14 dans leur configuration finale, les parois supplémentaires 32 des différents modules peuvent être, soit jointives les unes avec les autres, soit espacées les unes des autres. Dans le cas où les parois supplémentaires 32 sont jointives, des perforations sont généralement pratiquées sur ces parois, notamment en regard de la ou des ouvertures de sortie d'air O3, afin de permettre l'évacuation du flux d'air chaud directement par la face avant du module, plutôt que de laisser le flux d'air chaud monter le long de la face interne de ces parois. Dans le cas où les parois supplémentaires sont espacées les unes des autres, il est toutefois également possible de prévoir des perforations à travers ces parois.

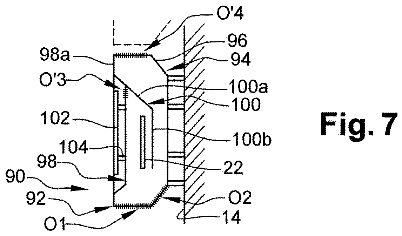

Dans une variante de réalisation non représentée sur la figure 2, la paroi supplémentaire 32 possède des dimensions inférieures à celles de la paroi frontale. Une telle configuration est par exemple illustrée sur la figure 7 qui sera décrite plus loin.

La paroi supplémentaire 32 a généralement une forme sensiblement plane comme représenté sur la figure 2. Toutefois, le contour extérieur de cette paroi en vue de face peut, comme celui des modules, adopter différentes géométries, comme mentionné plus haut pour les modules.

Selon la figure 3, le système 40 comprend un ensemble chauffant avec au moins un module chauffant inférieur 42 et un module chauffant supérieur 44 illustré partiellement en pointillés. Les deux modules sont fixés au support sensiblement vertical 14 de manière identique aux figures 1 et 2.

Le module inférieur 42 (tout comme le module supérieur 44) comprend un corps 46 dont la forme générale est sensiblement la même que celle du corps 20 de la figure 1 et qui est formé par l'assemblage d'un capot arrière ouvert 50 et d'une paroi frontale 48 ferment ce capot.

Le corps comprend également au moins un élément électrique chauffant identique à l'élément électrique chauffant 22 de la figure 1. Les ouvertures d'entrée d'air O1 et O2 sont identiques à celles de la figure 1.

À la différence des figures 1 et 2, le corps du module 42 renferme un déflecteur interne 52 disposé de manière à dévier le flux d'air ascendant qui entre dans le module par les ouvertures d'entrée d'air O1 et O2.

Ce déflecteur 52 prend la forme d'une paroi interne qui sépare l'espace interne au corps en une première zone, dite avant, où est logé l'élément électrique chauffant 22 et une deuxième zone, dite arrière, dépourvue d'élément électrique chauffant et donc de source de chaleur. Le déflecteur interne présente de manière générale une forme de L inversée dont la barre horizontale 52a est disposée dans la partie supérieure du corps contre la paroi frontale 48 et dont la barre verticale ou sensiblement verticale 52b s'étend sensiblement verticalement en direction de la partie inférieure du corps comme représenté sur la figure 3.

Le flux d'air ascendant à température ambiante qui entre dans le corps par la ou les ouvertures d'entrée d'air O1 et O2 est séparé par ce déflecteur en un premier flux ascendant qui est diffusé dans la première zone et un deuxième flux qui est diffusé dans la deuxième zone.

Le premier flux d'air ascendant est guidé par le déflecteur 52 dans la première zone et rencontre l'élément chauffant 22 qu'il longe de tous côtés en le refroidissant. Ce flux d'air chauffé est ensuite dévié sensiblement horizontalement par la partie supérieure 52a du déflecteur et est ainsi contraint à emprunter la ou les ouvertures de sortie d'air O3 pour s'échapper du module suivant une direction de sortie qui n'est pas dirigée vers le module supérieur.

Le deuxième flux d'air ascendant est guidé par le déflecteur 52 dans la deuxième zone qui longe la paroi arrière du capot 50 et remonte le long de celle-ci jusqu'à atteindre la partie supérieure de la deuxième zone où une ou des ouvertures de sortie d'air O4 sont aménagées dans la portion sensiblement horizontale de la partie supérieure du capot arrière. Ce deuxième flux d'air n'est quasiment pas chauffé par la zone lors de son trajet ascendant dans la mesure où le déflecteur interne joue le rôle d'un écran thermique entre les deux zones. Ce deuxième flux d'air peut donc être évacué du module suivant une direction sensiblement verticale qu'il amène directement sur le module supérieur, notamment au niveau d'une ou de ses ouvertures d'entrée d'air O1, O2. Cela n'est toutefois pas gênant dans la mesure où ce flux d'air n'est pas chaud et ne vient donc pas influencer thermiquement le module supérieur. La ou les ouvertures de sortie d'air O4 sont séparées de la des ouvertures de sortie d'air O3 par le déflecteur interne 52, notamment sa partie supérieure 52a.

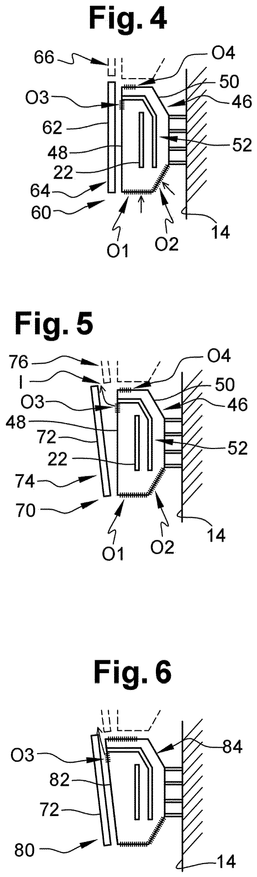

Selon un deuxième mode de réalisation, le système 60 de la figure 4 reprend le système 40 de la figure 3 (celui-ci ne sera donc pas décrit à nouveau) et y adjoint une paroi supplémentaire 62 identique à la paroi 32 du mode de la figure 2. Les éléments, caractéristiques, fonctions associées à la figure 3 et à la paroi 32 du mode de réalisation de la figure 2 et les avantages y afférents sont conservés et ne seront pas à nouveau décrits ici. Le système 60 comprend le module inférieur 64 identique au module inférieur 42 de la figure 3 sans la paroi supplémentaire 62 et le module supérieur 66 identique au module supérieur 44 de la figure 3.

Le système 70 du troisième mode de réalisation de la figure 5 diffère du mode de la figure 4 par l'inclinaison de la partie supérieure de la paroi supplémentaire formant façade avant 72 du module inférieur 74. Ainsi l'écartement entre la paroi supplémentaire 72 et la paroi frontale 48 du corps va en s'élargissant de la partie basse du corps à la partie haute de ce dernier. Le flux d'air chaud sortant de la ou des ouvertures de sortie d'air O3 est ainsi dévié de sa trajectoire sensiblement horizontale par la partie supérieure inclinée de la paroi 72 qui oriente le flux d'air vers le haut, dans une direction inclinée éloignée du module supérieur 76.

Avec cette orientation le flux d'air chaud s'élève en s'écartant du module supérieur 76 et peut s'écouler, à travers l'interstice I (généré par la géométrie de l'assemblage des modules inférieur et supérieur entre eux) entre les deux parois supplémentaires adjacentes des deux modules, le long de la face externe de la paroi supplémentaire inclinée du module supérieur. Il n'y a donc aucun risque d'élévation de la température du module supérieur 76 par le flux d'air chaud sortant du module inférieur. On notera que cette déviation supplémentaire du flux d'air chaud sortant du module inférieur permet d'éviter d'avoir à percer la paroi supplémentaire 72 pour l'évacuation de ce flux, comme cela a déjà été expliqué en référence aux modes des figures 2 et 4.

Dans cette configuration, les dimensions de la paroi supplémentaire 72, notamment sa hauteur, peuvent être augmentées par rapport aux modes des figures 2 et 4 dans la mesure où les parois supplémentaires adjacentes de deux modules inférieur et supérieur ne sont pas susceptibles d'entrer en contact l'une avec l'autre. Par exemple, la paroi 72 du module inférieur 74 peut ainsi recouvrir en partie la paroi supplémentaire du module supérieur 76 à la manière de tuiles. De préférence, le recouvrement n'intervient que sur une faible portion de la hauteur des parois supplémentaires.

On notera que l'inclinaison de la paroi supplémentaire 72 peut varier entre une valeur de quelques degrés (ex : 5°) par rapport à l'agencement sensiblement vertical de la paroi frontale 48 jusqu'à une valeur supérieure de l'ordre de 10°, 15°, 20° ou plus selon la configuration des modules et de l'ensemble chauffant. De manière plus générale, la paroi supplémentaire 72 est inclinée par rapport à la paroi frontale 48 d'un angle d'une valeur située entre 1 et 45°, de préférence entre 5 et 35°, de manière encore préférée entre 10 et 30°.

Le système 80 du quatrième mode de réalisation de la figure 6 diffère du système 70 de la figure 5 par l'inclinaison de la paroi frontale 82 du corps 84 du module. De ce fait, le corps 84 du module est plus large dans sa partie supérieure que dans sa partie inférieure (la largeur du corps est en prise horizontalement dans une direction perpendiculaire au plan du support 14. Cette inclinaison de la paroi frontale 82 permet de dévier davantage que dans le mode de la figure 5 le flux d'air chaud sortant par la ou les ouvertures de sortie d'air O3 du module inférieur. Pour une même configuration et une même orientation de la ou des ouvertures de sortie d'air O3 que dans le mode de la figure 5, le flux d'air chaud sortant de cette ou ces ouvertures est orienté vers le bas (l'inclinaison est d'autant plus grande que la paroi 82 est inclinée), ce qui l'éloigne encore plus du module supérieur. La paroi frontale inclinée 82 permet également, de par son inclinaison, de guider ce flux d'air, conjointement avec la paroi supplémentaire 72, de manière encore plus éloignée du module supérieur que sur la figure 5.

Le système 90 du cinquième mode de réalisation de la figure 7 diffère des systèmes des modes précédents par plusieurs aspects.

Le module 92 comprend un corps 94 qui comporte un capot arrière 96 fermé par une paroi frontale 98. Le corps 94 renferme un ou plusieurs éléments électriques chauffants 22, un déflecteur interne 100 qui assure la même fonction que le déflecteur interne 52 des modes précédents, une ou des ouvertures d'entrée d'air O1, O2 en partie basse du corps, une ou des ouvertures de sortie d'air O'3 en partie haute de la paroi frontale 98 et une ou des ouvertures de sortie d'air O'4 dans la partie supérieure sensiblement horizontale du capot arrière 96.

La paroi frontale 98 présente une forme générale concave orientée vers l'extérieur du corps de manière à guider vers l'extérieur la partie du flux d'air chaud sortant du module par la ou les ouvertures de sortie d'air O'3 et qui est déviée, en l'occurrence par le déflecteur 100. Cette partie du flux d'air chaud correspond au premier flux d'air qui se propage dans la première zone du corps où est logé l'élément chauffant 22, comme déjà expliqué ci-dessus en référence au mode de la figure 3. La paroi frontale 98 s'étend au-delà de la concavité par un bord périphérique 98a sensiblement plan qui est agencé sur la figure 7 dans un plan sensiblement vertical. Le bord périphérique 98a peut s'étendre sur toute la périphérie de la paroi frontale ou seulement sur une partie de celle-ci. Le déflecteur interne 100 est monté sur le côté interne de la paroi 98.

Plus particulièrement, la paroi frontale 98 présente une forme générale de cuvette est par exemple une forme d'aspect essentiellement tronconique, la ou les ouvertures de sortie d'air O'3 étant pratiquées dans la portion sensiblement plane formant le fond du tronc de cône. La forme tronconique se prolonge extérieurement par le bord périphérique sensiblement plat 98a. Le déflecteur interne 100 présente une première portion 100a qui suit l'inclinaison de la portion inclinée du tronc de cône et une seconde portion 100b tombant sensiblement verticalement.

Le module comporte également une paroi supplémentaire 102 qui est disposée devant la paroi frontale 98, à distance de celle-ci, fixée à cette dernière par exemple par des bras 104, mais qui, à la différence des modes précédents, est positionné de manière affleurante par rapport au bord périphérique 98a de la paroi frontale. La paroi supplémentaire 102 ne fait donc pas saillie par rapport au corps 94 du module comme pour les autres modes mais est circonscrite dans l'enveloppe externe du corps 94 et n'induit donc pas un encombrement supplémentaire en face avant du module. La conception de ce module est plus compacte que celle des autres modes de réalisation.

Sur la figure 8 le système 110 comprend un ensemble chauffant 112 comprenant plusieurs modules électriques chauffants 114 fixés à un support sensiblement vertical non représenté par l'intermédiaire d'une pluralité de dispositifs d'accrochage 116 qui sont ici tous identiques entre eux d'un module à l'autre.

Les modules 114 sont ici tous identiques et sont disposés les uns au-dessus des autres dans un assemblage vertical suivant une vue perpendiculaire au plan du support sensiblement vertical auquel l'ensemble chauffant est fixé. En vue de face, c'est-à-dire dans un plan parallèle au plan du support sensiblement vertical, les modules peuvent présenter un décalage horizontal l'un par rapport à l'autre sans que cela n'affecte leur différence de cote ou d'altitude.

Chaque module 114 présente ici la configuration du module 70 de la figure 5 à l'exception toutefois du déflecteur interne 118 qui ici est positionné par sa partie supérieure plane contre la partie supérieure plane du capot arrière du module. De ce fait, la ou les ouvertures de sortie d'air O4 de la figure 5, référencées ici O"4, sont décalées vers l'arrière du capot sur la figure 8, en retrait de la paroi frontale. Les autres détails de réalisation de la figure 5 ne sont pas repris sur la figure 8 par souci de simplicité.

Comme représenté sur la figure 8, les flèches ascendantes inclinées qui sont agencées chacune dans l'interstice géométrique formé entre deux modules voisins (module inférieur et module supérieur) représentent chacune le flux d'air chaud dévié qui s'échappe du module inférieur de manière écartée par rapport au module supérieur afin de limiter, voire d'éviter, d'influencer thermiquement le module supérieur.

## Revendications

1. Système (10) comprenant un ensemble chauffant (12) et un support sensiblement vertical (14) auquel est fixé ledit ensemble chauffant, l'ensemble chauffant (12) comprenant au moins deux modules (16, 18) électriques chauffants disposés contre le support vertical, l'un des modules, dit module supérieur (18), étant disposé à une cote supérieure à celle de l'autre module, dit module inférieur (16), chaque module électrique chauffant comprenant un corps (20,46,84,94) qui renferme au moins un élément électrique chauffant (22) et qui est délimité extérieurement par une paroi, la paroi étant pourvue, d'une part, d'une ou de plusieurs ouvertures d'entrée d'air aménagées dans sa partie basse et, d'autre part, d'une ou de plusieurs ouvertures de sortie d'air disposées dans sa partie haute pour la circulation d'un flux d'air ascendant à l'intérieur dudit corps, notamment sur ledit au moins un élément électrique chauffant à refroidir, au moins une partie de la ou des ouvertures de sortie d'air de chaque module étant orientée de manière à dévier au moins une partie du flux d'air sortant dudit module de telle manière que, pour les modules inférieur (16) et supérieur (18), ladite au moins une partie du flux d'air chauffée par ledit au moins un élément électrique chauffant (22) et sortant du module inférieur (16) est déviée en éloignement du module supérieur (18), **caractérisé en ce que** chaque module (16, 18) comporte une paroi supplémentaire (32,42,62,72,102) disposée devant la paroi frontale (26,48,82,98) du corps (20,46,84,94) du module et à distance de ladite paroi de manière à former une façade avant pour le corps (20,46,84,94).

2. Système (10) selon la revendication 1, **caractérisé en ce que** la paroi délimitant le corps (20) de chaque module (16, 18) comporte une paroi arrière (24) et ladite paroi frontale (26) opposée à ladite paroi arrière (24), ladite paroi arrière (24) faisant face au support sensiblement vertical, ladite au moins une partie de la ou des ouvertures de sortie d'air qui est orientée de manière à dévier au moins une partie du flux d'air sortant du module étant aménagée dans la partie supérieure de la paroi frontale (26).

3. Système (10) selon la revendication 1 ou 2, **caractérisé en ce que** la paroi supplémentaire (72) formant façade avant est inclinée par rapport à la paroi frontale (26) de telle manière que l'écartement entre ladite paroi supplémentaire et la paroi frontale est plus grand en partie haute du corps (20) qu'en partie basse.

4. Système (10) selon la revendication 3, **caractérisé en ce que** la paroi supplémentaire (72) formant façade avant est inclinée par rapport à la paroi frontale (26) d'un angle d'une valeur située entre 1 et 45°.

5. Système (10) selon l'une des revendications précédentes, **caractérisé en ce que** la paroi supplémentaire (32) formant façade avant est perforée dans son épaisseur sur au moins une partie de sa surface.

6. Système (10) selon l'une des revendications précédentes, **caractérisé en ce que** la paroi supplémentaire (32,62,72) formant façade avant possède des dimensions qui sont égales ou supérieures à celles de la paroi frontale (26,48,82)

7. Système (10) selon l'une des revendications précédentes, **caractérisé en ce que** la paroi frontale (98) présente une forme générale concave orientée vers l'extérieur du corps (94) de manière à guider vers l'extérieur ladite au moins une partie du flux d'air sortant du module et qui est déviée.

8. Système (10) selon l'une des revendications précédentes, **caractérisé en ce que** le corps (94) de chaque module renferme un déflecteur interne (100) qui est disposé de manière à dévier le flux d'air ascendant qui traverse la zone du corps (94) où est logé ledit au moins un élément électrique chauffant (22) en direction de ladite au moins une partie de la ou des ouvertures de sortie d'air (O3) qui est orientée de manière à dévier au moins une partie du flux d'air sortant du module et qui est appelée partie d'ouverture de sortie d'air orientée.

9. Système (10) selon la revendication 8, **caractérisé en ce que** le déflecteur interne (100) sépare le flux d'air ascendant entrant dans le corps par la ou les ouvertures d'entrée d'air, d'une part, en un premier flux d'air ascendant qui traverse une première zone où est logé ledit au moins un élément électrique chauffant et, d'autre part, en un second flux d'air ascendant qui traverse une deuxième zone du corps, ledit déflecteur interne guidant ce second flux d'air ascendant en direction d'une ou de plusieurs autres ouvertures de sortie d'air qui sont disposées dans une partie haute de la paroi du corps sensiblement horizontale et qui sont séparées de la partie d'ouverture de sortie d'air orientée par le déflecteur interne.

10. Système (10) selon la revendication 9, **caractérisé en ce que** le déflecteur interne (100) a une fonction d'écran thermique entre la première zone où est logé ledit au moins un élément électrique chauffant (22) et la deuxième zone du corps traversée par le second flux d'air.

## Patentansprüche

1. System (10), das einen Heizsatz (12) und einen im Wesentlichen vertikalen Halter (14) umfasst, an dem der Heizsatz befestigt ist, wobei der Heizsatz (12) mindestens zwei elektrische Heizmodule (16, 18) umfasst, die an dem vertikalen Halter angeordnet sind, wobei eines der Module, das sogenannte obere Modul (18), höher als das andere Modul, genannt unteres Modul (16), ist, wobei jedes elektrische Heizmodul einen Körper (20, 46, 84, 94) umfasst, der mindestens ein elektrisches Heizelement (22) enthält und außen durch eine Wand begrenzt ist, wobei die Wand einerseits mit einer oder mehreren Lufteintrittsöffnungen versehen ist, die in ihrem unteren Teil eingerichtet sind, und andererseits mit einer oder mehreren Luftaustrittsöffnungen, die in ihrem oberen Teil eingerichtet sind, um einen aufsteigenden Luftstrom in dem Inneren des Körpers, insbesondere über das mindestens eine zu kühlende elektrische Heizelement, zu erzeugen, wobei mindestens ein Teil der Luftaustrittsöffnung(en) jedes Moduls so ausgerichtet ist, dass mindestens ein Teil des aus dem Modul austretenden Luftstroms so umgeleitet wird, dass für das untere (16) und das obere (18) Modul der mindestens eine Teil des durch das mindestens eine elektrische Heizelement (22) erwärmten und aus dem unteren Modul (16) austretenden Luftstroms von dem oberen Modul (18) weg umgelenkt wird, **dadurch gekennzeichnet, dass** jedes Modul (16, 18) eine zusätzliche Wand (32, 42, 62, 72, 102) aufweist, die vor der Frontwand (26, 48, 82, 98) des Modulkörpers (20, 46, 84, 94) und in einem Abstand von dieser Wand angeordnet ist, um eine vordere Fassade für den Körper (20, 46, 84, 94) zu bilden.

2. System (10) nach Anspruch 1, **dadurch gekennzeichnet, dass** die den Körper (20) jedes Moduls (16, 18) begrenzende Wand eine Rückwand (24) und die der Rückwand (24) gegenüberliegende Frontwand (26) aufweist, wobei die Rückwand (24) dem im Wesentlichen vertikalen Halter zugewandt ist, wobei der mindestens eine Teil der Luftaustrittsöffnung(en), der so ausgerichtet ist, dass er mindestens einen Teil des aus dem Modul austretenden Luftstroms ablenkt, in dem oberen Teil der Frontwand (26) eingerichtet ist.

3. System (10) nach Anspruch 1 oder 2, **dadurch gekennzeichnet, dass** die zusätzliche Wand (72), die die vordere Fassade bildet, in Bezug auf die Frontwand (26) so geneigt ist, dass der Abstand zwischen der zusätzlichen Wand und der Frontwand im oberen Teil des Körpers (20) größer ist als im unteren Teil.

4. System (10) nach Anspruch 3, **dadurch gekennzeichnet, dass** die zusätzliche Wand (72), die die vordere Fassade bildet, in Bezug auf die Frontwand (26) um einen Winkel mit einem Wert zwischen 1 und 45° geneigt ist.

5. System (10) nach einem der vorhergehenden Ansprüche, **dadurch gekennzeichnet, dass** die zusätzliche Wand (32), die die vordere Fassade bildet, in ihrer Dicke über mindestens einen Teil ihrer Oberfläche perforiert ist.

6. System (10) nach einem der vorhergehenden Ansprüche, **dadurch gekennzeichnet, dass** die zusätzliche Wand (32, 62, 72), die die vordere Fassade bildet, Abmessungen hat, die gleich oder größer sind als die der Frontwand (26, 48, 82) .

7. System (10) nach einem der vorhergehenden Ansprüche, **dadurch gekennzeichnet, dass** die Frontwand (98) eine allgemein konkave Form darstellt, die zum Äußeren des Körpers (94) hin ausgerichtet ist, um den mindestens einen Teil des aus dem Modul austretenden Luftstroms, der abgelenkt wird, nach außen zu leiten.

8. System (10) nach einem der vorhergehenden Ansprüche, **dadurch gekennzeichnet, dass** der Körper (94) jedes Moduls einen inneren Deflektor (100) enthält, der so angeordnet ist, dass er den aufsteigenden Luftstrom, der den Bereich des Körpers (94) durchquert, in dem sich das mindestens eine elektrische Heizelement (22) befindet, in Richtung des mindestens einen Teils der Luftaustrittsöffnung(en) (O3) ablenkt, der so ausgerichtet ist, dass er mindestens einen Teil des aus dem Modul austretenden Luftstroms ablenkt, und der als ausgerichteter Luftaustrittsöffnungsteil bezeichnet wird.

9. System (10) nach Anspruch 8, **dadurch gekennzeichnet, dass** der innere Deflektor (100) den aufsteigenden Luftstrom, der durch die Lufteintrittsöffnung(en) in den Körper eintritt, einerseits in einen ersten aufsteigenden Luftstrom, der einen ersten Bereich durchquert, in dem sich das mindestens eine elektrische Heizelement befindet, und andererseits in einen zweiten aufsteigenden Luftstrom, der einen zweiten Bereich des Körpers durchquert, trennt, wobei der innere Deflektor diesen zweiten aufsteigenden Luftstrom in Richtung einer oder mehrerer weiterer Luftaustrittsöffnungen leitet, die in einem oberen Teil der im Wesentlichen horizontalen Wand des Körpers angeordnet und von dem durch den inneren Deflektor ausgerichteten Luftaustrittsöffnungsteil getrennt sind.

10. System (10) nach Anspruch 9, **dadurch gekennzeichnet, dass** der innere Deflektor (100) eine Wärmeschutzfunktion zwischen dem ersten Bereich, in dem sich das mindestens eine elektrische Heizelement (22) befindet, und dem zweiten Bereich des Körpers, der vom zweiten Luftstrom durchströmt wird, hat.

## Claims

1. System (10) comprising a heating assembly (12) and a substantially vertical support (14) to which said heating assembly is fixed, the heating assembly (12) comprising at least two electric heating modules (16, 18) positioned against the vertical support, one of the modules, referred to as upper module (18), being at a level higher than that of the other module, referred to as lower module (16), each electric heating module comprising a body (20, 46, 84, 94) which contains at least one electric heating element (22) and which is bounded externally by a wall, the wall being provided, on the one hand, with one or more air inlet openings formed in its lower part and, on the other hand, with one or more air outlet openings positioned in its upper part for the circulation of an upward air flow inside said body, notably over said at least one electric heating element that is to be cooled, at least a part of the air outlet opening or openings of each module being oriented in such a way as to deflect at least a part of the air flow leaving said module in such a way that, for the lower (16) and upper (18) modules, said at least part of the air flow heated by said at least one electric heating element (22) and leaving the lower module (16) is deflected away from the upper module (18), **characterized in that** each module (16, 18) comprises an additional wall (32, 42, 62, 72, 102) positioned in front of the frontal wall (26, 48, 82, 98) of the body (20, 46, 84, 94) of the module and at a distance from said wall so as to form a front facade for the body (20, 46, 84, 94).

2. System (10) according to Claim 1, **characterized in that** the wall bounding the body (20) of each module (16, 18) comprises a rear wall (24) and said frontal wall (26) opposite to said rear wall (24), said rear wall (24) facing the substantially vertical support, said at least a part of the air outlet opening or openings which is oriented in such a way as to deflect at least a part of the air flow leaving the module being created in the upper part of the frontal wall (26).

3. System (10) according to Claim 1 or 2, **characterized in that** the additional wall (72) forming a front façade is inclined with respect to the frontal wall (26) in such a way that the separation between said additional wall and the frontal wall is greater in the upper part of the body (20) than in the lower part.

4. System (10) according to Claim 3, **characterized in that** the additional wall (72) forming a front façade is inclined with respect to the frontal wall (26) by an angle of a magnitude situated between 1 and 45°.

5. System (10) according to one of the preceding claims, **characterized in that** the additional wall (32) forming a front façade is perforated in its thickness over at least a part of its surface.

6. System (10) according to one of the preceding claims, **characterized in that** the additional wall (32, 62, 72) forming a front façade has dimensions equal to or greater than those of the frontal wall (26, 48, 82).

7. System (10) according to one of the preceding claims, **characterized in that** the frontal wall (98) has a concave overall shape oriented towards the outside of the body (94) so as to guide towards the outside said at least part of the air flow leaving the module and which is deflected.

8. System (10) according to one of the preceding claims, **characterized in that** the body (94) of each module contains an internal deflector (100) which is positioned in such a way as to deflect the upward air flow that passes through the region of the body (94) in which said at least one electric heating element (22) is housed toward said at least part of the air outlet opening or openings (O3) that is oriented in such a way as to deflect at least part of the air flow leaving the module and which is referred to as the oriented air outlet opening part.

9. System (10) according to Claim 8, **characterized in that** the internal deflector (100) divides the upward air flow entering the body through the air inlet opening or openings into, on the one hand, a first upward air flow that passes through a first region in which said at least one electric heating element is housed and, on the other hand, a second upward air flow that passes through a second region of the body, said internal deflector guiding this second upward air flow towards one or more other air outlet openings which are positioned in a substantially horizontal upper part of the wall of the body and which are separated from the oriented air outlet opening part by the internal deflector.

10. System (10) according to Claim 9, **characterized in that** the internal deflector (100) acts as a heat shield between the first region in which said at least one electric heating element (22) is housed and the second region of the body through which the second air flow passes.
